# EUROPEAN PATENT APPLICATION

(11) **EP 4 726 897 A1**
(43) Date of publication of application: **15.04.2026**
(21) Application number: 24819273.4
(22) Date of filing: 31.05.2024
(51) Int. Cl.: H01M 50/358, F16J 15/10, H01M 50/35, H01M 50/204, H01M 50/209

(54) **GASKET**

(30) Priority: 09.06.2023 JP 2023095907
(71) Applicant: NOK Corporation, Minato-ku Tokyo 105-8585 (JP)
(72) Inventor: YOSHIDA Yusuke, Kitaibaraki-shi Ibaraki 319-1535 (JP)
(74) Representative: Global IP Europe Patentanwaltskanzlei
(86) International application number: PCT/JP2024/020072
(87) International publication number: WO 2024/253043

(57) **Abstract**

Provided is a gasket having high conformability to an object being contacted and having excellent pressure resistance and heat resistance. A gasket 1 is provided with: a plurality of flow path portions 10 each being a tubular member and having a pair of openings 11, 12; and a base body 20 having a pair of surfaces, namely, a front surface 21 and a rear surface 22 facing away from each other. The base body 20 is elastic. The flow path portions 10 are held by the base body 20 in such a manner that the openings 11, 12 respectively open on the front surface 21 and the rear surface 22 of the base body 20, so as to form a flow path for a sealing target object. Hardness of the base body 20 is lower than hardness of the flow path portions 10.

## Description

### Technical Field

The present invention relates to a gasket.

### Background Art

Battery modules having a plurality of battery cells, such as lithium ion battery modules, are provided with a gas discharge path for guiding, to the outside, gas discharged from an rupture disc provided for each of the battery cells. The rupture discs of the battery cells communicate with the gas discharge path, so that the gas discharged from the rupture discs of the battery cells goes through the gas discharge path and is guided to the outside. In such a battery module, when internal pressure inside the battery cells becomes high due to the gas generated in the battery cells, the gas is discharged to the outside via the rupture discs. Further, a gasket is provided between the rupture discs of the battery cells and the gas discharge path. The gasket seals a communication path between the rupture discs and the gas discharge path, so as to prevent leakage, to the outside of the gas discharge path, of the gas discharged from the rupture discs (see Patent Literature 1, for example).

Such a gasket for a battery module is required to closely adhere to the battery module and to the gas discharge path, in order to provide sealing for the gas discharged from the rupture discs. For this reason, the gasket is configured to have low hardness which causes low reaction force and may be formed of, for example, a foamed material such as foamed silicone foam or urethane foam. When a gasket has low hardness, reaction force occurring at the time of deformation of the gasket will be low, which gives the gasket high conformability to the shape of an object being contacted.

### Citation List

### Patent Literature

Patent Literature 1: Japanese Translation of PCT international Application Publication No. 2022-500810

### Summary of Invention

### Technical Problem

The gas discharged from the rupture discs has high pressure. Also, the gas discharged from the rupture discs has high temperature, which may be temperature of 400°C or higher. For this reason, gaskets formed of a foamed material as hitherto known have the risk of leaking the high-pressure gas discharged from the rupture discs, due to the foamed structure thereof and also for being easily deformed. In addition, gaskets formed of a foamed material as hitherto known have the possibility of being melted when being exposed to the gas discharged from the rupture discs.

As explained above, with gaskets hitherto known for use with rupture discs, there is a demand for a configuration having high conformability to an object being contacted and having excellent pressure resistance and heat resistance.

The present invention was made in view of the problems described above. A purpose thereof is to provide a gasket having high conformability to an object being contacted and having excellent pressure resistance and heat resistance.

### Solution to Problem

To fulfill the abovementioned purpose, a gasket according to the present invention is a gasket used between two members for providing sealing for a sealing target object and is provided with: a plurality of flow path portions each being a tubular member and having a pair of openings; and a base body having a pair of surfaces facing away from each other. The base body is elastic. The flow path portions are held by the base body in such a manner that the pair of openings respectively open on the pair of surfaces of the base body, so as to form a flow path for the sealing target object. Hardness of the base body is lower than hardness of the flow path portions.

In the gasket according to an aspect of the present invention, the base body has such hardness that the base body is able to maintain a shape thereof in a natural state receiving no external force.

In the gasket according to an aspect of the present invention, the base body has such hardness that reaction force is generated when the base body is compressed between the two members.

In the gasket according to an aspect of the present invention, the base body has such hardness that the base body is deformed when receiving pressure of the sealing target object.

In the gasket according to an aspect of the present invention, the base body is formed from a material having low hardness, and the material having the low hardness include rubber, urethane, an elastomer.

In the gasket according to an aspect of the present invention, the flow path portions are formed from a material having heat resistance.

In the gasket according to an aspect of the present invention, the heat resistance of the flow path portions is heat resistance against temperature of the sealing target object.

In the gasket according to an aspect of the present invention, the material is PTFE.

In the gasket according to an aspect of the present invention, the base body has adhesiveness.

In the gasket according to an aspect of the present invention, the adhesiveness of the base body is adhesiveness capable of fixing the base body against force based on a dead weight of the gasket.

In the gasket according to an aspect of the present invention, the base body has a recessed part between any two of the flow path portions positioned adjacent to each other, and the recessed part is recessed in directions in which the pair of surfaces of the base body face.

In the gasket according to an aspect of the present invention, one of the two members is a plurality of battery cells of a battery module; another of the two members is a gas discharge portion forming a space for guiding gas discharged from respective rupture discs of the plurality of battery cells; the sealing target object is the gas discharged from the plurality of rupture discs; and each of the plurality of flow path portions forms the flow path for the gas discharged from the plurality of rupture discs.

### Advantageous Effects of Invention

The gasket according to the present invention realizes having high conformability to an object being contacted and having excellent pressure resistance and heat resistance.

### Brief Description of Drawings

Fig. 1 is a perspective exploded view schematically showing a battery module employing a gasket according to a first embodiment of the present invention.
Fig. 2 is a plan view of the gasket shown in Fig. 1.
Fig. 3 is a cross-sectional view of the gasket showing a cross-section taken along line A-A in Fig. 2.
Fig. 4 is an enlarged cross-sectional view showing, in enlargement, the vicinity of a flow path portion of the gasket shown in Fig. 3.
Fig. 5 is a partial cross-sectional view of the battery module showing a cross-section of the gasket in a usage state and attached to the battery module.
Fig. 6 is a partial enlarged cross-sectional view showing a modification example of the gasket according to the first embodiment of the present invention.
Fig. 7 is a plan view of a gasket according to a second embodiment of the present invention.
Fig. 8 is a cross-sectional view showing a modification example of the gasket according to the second embodiment of the present invention.
Fig. 9 is a cross-sectional view showing another modification example of the gasket according to the second embodiment of the present invention.

### Description of Embodiments

The following will describe embodiments of the present invention, with reference to the drawings. The plurality of constituent elements in the drawings do not all have a reference sign. The reference signs of some of the plurality of constituent elements may be omitted. A gasket according to the present invention may be used, in an example, for a battery module having a plurality of battery cells, such as a lithium ion battery module, and provides sealing for gas to be discharged from an rupture disc provided for each of the battery cells.

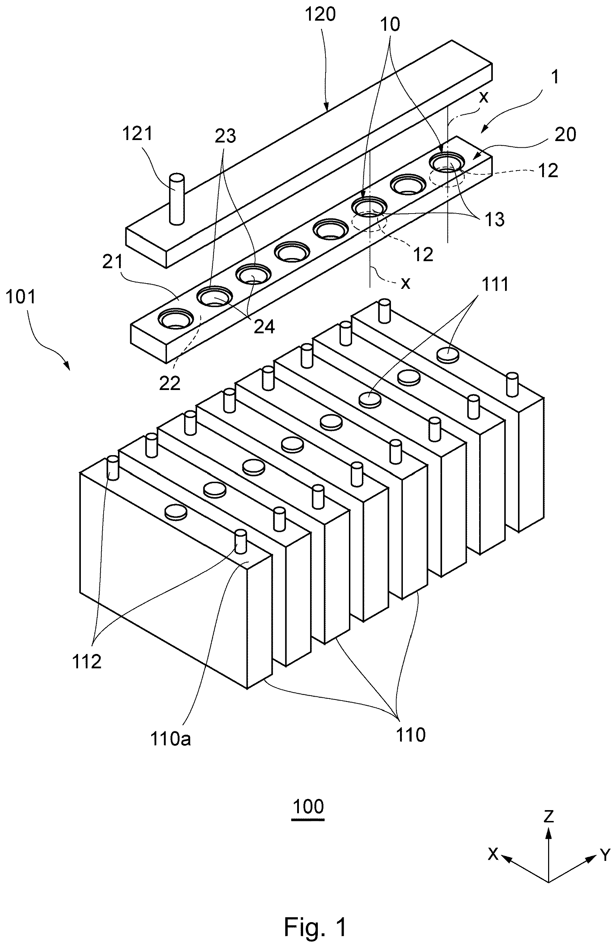

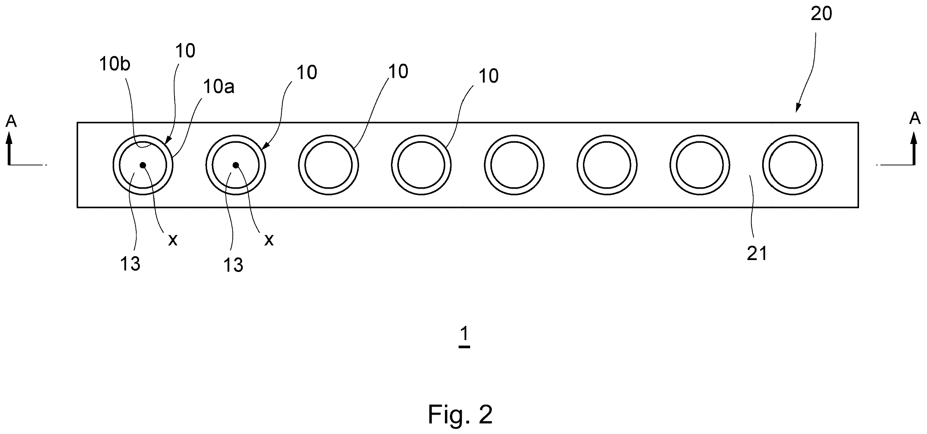

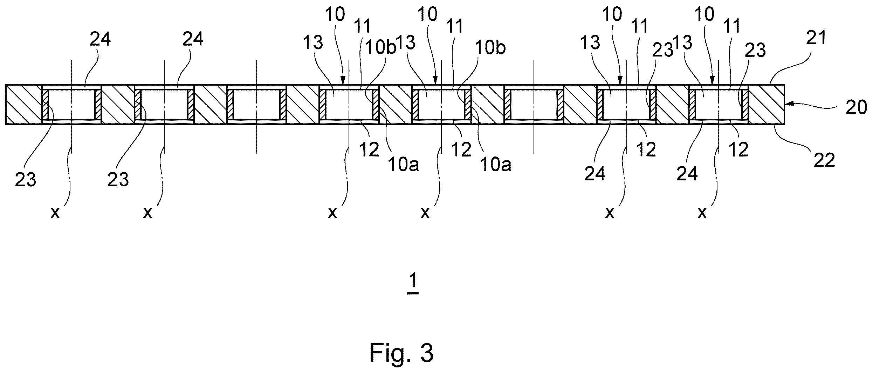

Fig. 1 is a perspective exploded view schematically showing a battery module 100 employing a gasket 1 according to a first embodiment of the present invention. Fig. 2 is a plan view of the gasket 1. Fig. 3 is a cross-sectional view of the gasket 1 showing a cross-section taken along line A-A in Fig. 2. The gasket 1 is a gasket used between a plurality of battery cells 110 of a battery module 100 and a discharge pipe 120 serving as a gas discharge portion forming a space for guiding gas discharged from respective rupture discs 111 of the plurality of battery cells 110, for providing sealing for the gas discharged from the rupture discs 111, the gas being a sealing target object.

As shown in Figs. 1 to 3, the gasket 1 is provided with: a plurality of flow path portions 10 each being a tubular member and having a pair of openings 11 and 12; and a base body 20 having a pair of surfaces, namely, a front surface 21 and a rear surface 22 facing away from each other. The base body 20 is elastic. The flow path portions 10 are held by the base body 20 in such a manner that the openings 11, 12 respectively open on the front surface 21 and the rear surface 22 of the base body 20, so as to form a flow path for the sealing target object. The hardness of the base body 20 is lower than the hardness of the flow path portions 10. Next, a configuration of the gasket 1 will specifically be explained.

As shown in Fig. 1, in the battery module 100, the plurality of battery cells 110 are arranged in a row and are fixed by a fixing member (not shown). Interposed between any set made up of a battery cell 110 and another battery cell 110 is electrically-insulating resin (not shown), for example. As being connected with one another, the plurality of battery cells 110 form a battery cell group 101. Each of the battery cells 110 is a secondary battery such as a lithium ion battery, for example, and may be charged. As for the external shape thereof, each of the battery cells 110 has a rectangular shape of which the dimension in the width direction (an X direction) is larger than the dimension in the height direction (a Z direction) and of which the dimension in the thickness direction (a Y direction) is small. The battery cells 110 are arranged along the Y direction.

Each of the battery cells 110 has the rupture disc 111, as described above and also has a pair of electrodes 112. The rupture disc 111 and the electrode 112 are provided on a top face 110a of each of the battery cells 110. The pair of electrodes 112 are arranged in two end portions in the width direction. One of the electrodes is a positive electrode, whereas the other electrode is a negative electrode. The rupture disc 111 is positioned in a central section in the width direction. In secondary batteries such as lithium ion batteries, gas may be generated on the inside thereof due to charging and discharging during use or an external cause, and the internal pressure thereof may increase. When the internal pressure of a corresponding one of the battery cells 110 has risen to a certain level, each of the rupture discs 111 opens so that the generated gas is released. This configuration inhibits the internal pressure of each of the battery cells 110 from rising to an intolerable level.

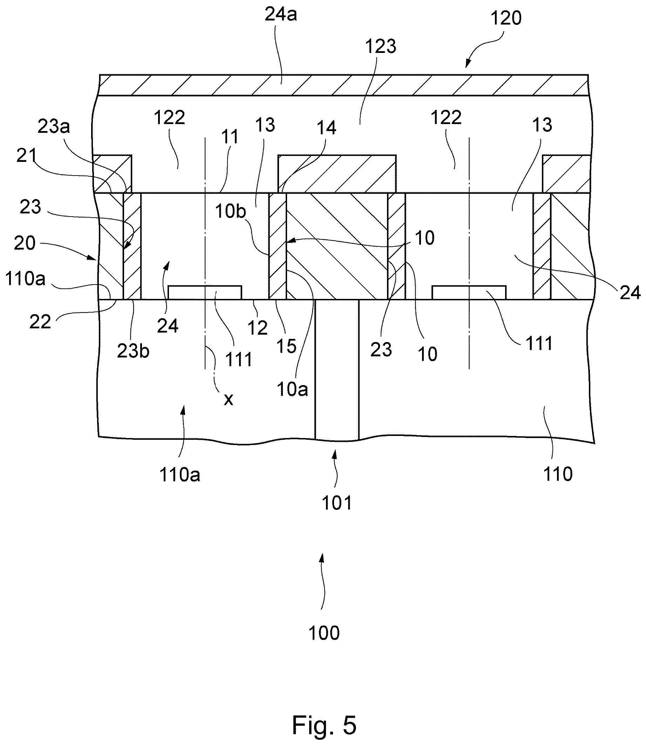

The discharge pipe 120 is an exhaust device for guiding the gas blasting out as a result of the rupture discs 111 having opened. The discharge pipe 120 is fixed to the battery cells 110 via the gasket 1 so as to extend over the plurality of battery cells 110 arranged in a row in the Y direction. The gasket 1 is brought into a usage state as being sandwiched, in a compressed state, between the respective top faces 110a of the arrayed plurality of battery cells 110 and the discharge pipe 120. The discharge pipe 120 is provided, for example, with openings 122 (see Fig. 5 explained later) corresponding to the rupture discs 111 of the battery cells 110. In the discharge pipe 120, a gas discharge path 123 (see

Fig. 5 explained later) is configured to guide, to the outside, the gas that has flowed in through the opening portions 122. The gas discharge path 123 opens to an external space through a discharge port 121. The gas that has blasted out from each of the rupture discs 111 goes through the flow path portion 10 of the gasket 1, is guided to the discharge pipe 120, and goes through a corresponding one of the opening portions and the gas discharge path, before being discharged to the outside space through the discharge port 121.

As shown in Figs. 1 to 3, the gasket 1 has as many flow path portions 10 as the rupture discs 111 respectively corresponding to the plurality of battery cells 110 in the battery cell group 101 of the battery module 100, the flow path portions 10 being arranged respectively in correspondence with the rupture discs 111 of the plurality of battery cells 110. The plurality of flow path portions 10 are arranged in a row, for example, at regular intervals or at substantially regular intervals.

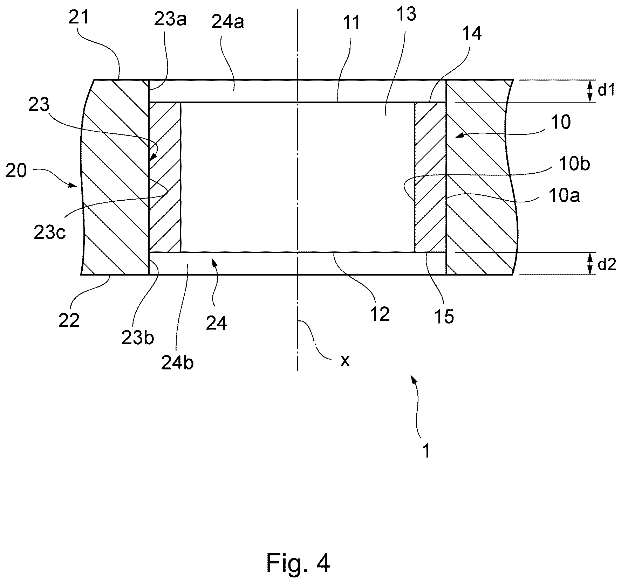

As shown in Figs. 1 to 3, the flow path portions 10 each have a tubular shape extending along an axis line x and each have formed therein a flow path 13 being a space extending along the axis line x. In the battery module 100, the axis line x extends parallel or substantially parallel to the height direction (the Z direction). Each of the flow path portions 10 has, for example, a circular tubular shape or a substantially circular tubular shape using the axis line x as the central axis or a substantially central axis thereof. However, the shape of each of the circulation portions 10 is not limited to a circular tubular shape. For example, each of the circulation paths 10 may have a polygonal tubular shape. The shape of the cross-section of each of the circulation paths 10 orthogonal to the axis line x is not limited to a circle and may be an oval, other circular shapes, a polygon, or the like. As shown in Fig. 4, each of the flow path portions 10 has an upper end face 14 and a lower end 15 face, which are a pair of end faces in the axis line x direction. The upper end face 14 defines the opening 11, whereas the lower end face 15 defines the opening 12. The upper end face 14 and the lower end face 15 each extend along a plane orthogonal to the axis line x, for example. Each of the flow paths 13 extends between the opening 11 and the opening 12.

Each of the openings 11 and 12 of each of the flow paths 10 has a shape corresponding to the rupture disc 111 of a corresponding one of the battery cells 110 and may have, for example, such a shape that the rupture disc 111 can be accommodated therein. More specifically, for example, the diameter of each of the openings 11 and 12 may be larger than the dimension in the width direction (the X direction) and the dimension in the thickness direction (the Y direction) of the rupture disc 111. Further, when each of the openings 11 and 12 of each of the flow paths 10 has a shape corresponding to the rupture disc 111 of a corresponding one of the battery cells 110 as described above, it is possible to attach the gasket 1 to the battery module 100, regardless of the orientation of the gasket 1 in the axis line x direction; however, it is also acceptable when only one of the openings 11 and 12 of each of the flow paths 10 has a shape corresponding to the rupture disc 111 of the battery cell 110 explained above. In that situation, in the battery module 100, the side of the one of the openings 11 and 12 of each of the flow paths 10 having the shape corresponding to the rupture disc 111 is the side corresponding to the battery cell group 101.

As shown in Fig. 1 to 3, the base body 20 has a plate-like shape extending in the direction in which the plurality of flow path portions 10 are arranged. For example, as shown in Fig. 3, the front surface 21 and the rear surface 22 of the base body 20 extend parallel or substantially parallel to each other and are each a flat plane or a substantially flat plane and extend along a plane orthogonal to the axis line x. However, the front surface 21 and the rear surface 22 of the base body 20 do not each necessarily need to be a flat plane. The front surface 21 and the rear surface 22 may each be a curved plane or the like having an arched plane, an undulating plane, or the like or may each be a structural plane. In this situation, the structural plane denotes a plane having a shape corresponding to a prescribed structure and may be, for example, a plane having a shape corresponding to the shapes of the top faces 110a of the battery cells 110 or to the shape of the discharge pipe 120.

As shown in Fig. 3, the dimension of the base body 20 in the axis line x direction is larger than the dimension of each of the flow path portions 10 in the axis line x direction. The front surface 21 of the base body 20 is on the upper side relative to the upper end face 14 of each of the flow path portions 10. The rear surface 22 of the base body 20 is on the lower side relative to the lower end face 15 of each of the flow path portions 10. In this situation, the "upper side" denotes the side corresponding to the facing direction of the front surface 21 in the axis line x direction, whereas the "lower side" denotes the side corresponding to the facing direction of the rear surface 22 in the axis line x direction. Further, for example, the dimension, in the axis line x direction, of the space between the upper end face 14 of each of the flow path portions 10 and the front surface 21 of the base body 20 is equal or substantially equal to the dimension, in the axis line x direction, of the space between the lower end face 15 of each of the flow path portions 10 and the rear surface 22 of the base body 20.

As shown in Figs. 3 and 4, the base body 20 has formed therein circulation hole surfaces 23 defining circulation holes 24 which are through holes for accommodating the circulation portions 10 therein. Each of the circulation hole surfaces 23 is a tubular surface corresponding to an outer peripheral surface 10a, which is the surface of the circulation portion 10 on the outer periphery side and extends along the axis line x. Each of the circulation surfaces 23 extends between the front surface 21 and the rear surface 22 of the base body 20. Between the front surface 21 and the rear surface 22, each of the circulation holes 24 penetrates the base body 20. Each of the circulation hole surfaces 23 contacts the outer peripheral surface 10a of the circulation portion 10, and each of the flow path portions 10 is thus held by the base body 20. Each of the flow path portions 10 may be held by the base body 20, for example, as being fitted to the circulation hole surface 23. Alternatively, each of the flow path portions 10 may be held by the base body 20, for example, as being adhered to the circulation hole surface 23. The mode of holding in which the flow path portions 10 are held by the base body 20 may be other modes. As explained above, the front surface 21 of the base body 20 is on the upper side relative to the upper end face 14 of each of the flow path portions 10, and the rear surface 22 of the base body 20 is on the lower side relative to the lower end face 15 of each of the flow path portions 10. Thus, as shown in Fig. 4, the circulation hole surfaces 23 and the circulation holes 24 each have formed therewith an upper circulation hole surface 23a and an upper circulation hole portion 24a which are sections positioned on the upper side relative to the upper end face 14 of the circulation path 10; and a lower circulation hole surface 23b and a lower circulation hole portion 24b which are sections positioned on the lower side relative to the lower end face 15 of the circulation path 10.

Each of the circulation hole surfaces 23 of the base body 20 has a shape corresponding to the outer peripheral surface of the circulation path 10, which may be, for example, a circular tubular surface or a substantially circular tubular surface using the axis line x as the central axis thereof or a substantially central axis thereof. However, the circulation hole surfaces 23 of the base body 20 are not limited to being circular tubular surfaces. For example, the circulation hole surfaces 23 may be polygonal tubular surfaces. The shape of a cross-section of each of the circulation hole surfaces 23 orthogonal to the axis line x is not limited to a circle and may be an oval, other circular shapes, a polygon, or the like. Further, the shape of the upper circulation hole surface 23a of each of the circulation hole surfaces 23 may be different from the shape of a section (a contact surface 23c) of the circulation hole surface 23 contacting the outer peripheral surface 10a of the circulation path 10. Similarly, the shape of the lower circulation hole surface 23b of each of the circulation hole surfaces 23 may be different from the shape of the contact surface 23c of the circulation hole surface 23. Furthermore, the shape of the upper circulation hole surface 23a and the shape of the lower circulation path surface 23b may be the same or may be different from each other. In addition, as shown in Fig. 4, an upper crush allowance d1 being the dimension of the upper circulation hole surface 23a of the base body 20 in the axis line x direction is equal or substantially equal to a lower crush allowance d2 being the dimension of the lower circulation hole surface 23b of the base body 20 in the axis line x direction. However, the upper crush allowance d1 and the lower crush allowance d2 may be different from each other.

The base body 20 has formed therewith the upper circulation hole portions 24a and the lower circulation hole portions 24b defined by the upper circulation hole surfaces 23a and the lower circulation hole surfaces 23b described above, respectively. Thus, in the gasket **1,** the opening 11 of each of the flow path portions 10 opens to the space outside the gasket 1 via the upper circulation hole portions 24a of the base body 20. The opening 12 of each of the flow path portions 10 opens to the space outside the gasket 1 via the lower circulation hole portions 24a of the base body 20.

Each of the upper circulation holes 23a and the lower circulation holes 23b of the base body 20 has a shape corresponding to the rupture disc 111 of a corresponding one of the battery cells 110 and may have, for example, such a shape that the rupture disc 111 can be accommodated therein. More specifically, for example, the diameter of each of the upper circulation holes 23a and the lower circulation holes 23b is larger than the dimension in the width direction (the X direction) and the dimension in the thickness direction (the Y direction) of the rupture disc 111. Further, when each of the upper circulation holes 23a and the lower circulation holes 23b of the base body 20 has the shape corresponding to the rupture disc 111 of a corresponding one of the battery cells 110 as described above, it is possible to attach the gasket 1 to the battery module 100, regardless of the orientation of the gasket 1 in the axis line x direction; however, it is also acceptable when only one of the upper circulation holes 23a and the lower circulation holes 23b of the base body 20 each have a shape corresponding to the rupture disc 111 of a corresponding one of the battery cells 110, as described above. In that situation, in the battery module 100, the side of the one of the upper circulation holes 23a and the lower circulation holes 23b of the base body 20 each having the shape corresponding to the rupture disc 111 is the side corresponding to the battery cell group 101.

As explained above, the hardness of the base body 20 is lower than the hardness of the flow path portions 10. More specifically, the base body 20 is a member having low hardness. For example, although having low hardness, the base body 20 may have such hardness that the base body 20 is able to maintain the shape thereof in a natural state receiving no external force. Further, for example, the base body 20 may have such hardness that reaction force is generated when the base body 20 is compressed. More specifically, the base body 20 may have such hardness that, while the gasket 1 is in a usage state, reaction force is generated on the top faces of the plurality of battery cells 110 and on the discharge pipe 12, while the base body 20 is in a state of being compressed between the top faces of the plurality of battery cells 110 in the battery cell group 101 and the discharge pipe 120. Further, for example, the base body 20 may have such hardness that the base body 20 is deformed when receiving pressure of the sealing target object, i.e., the gas discharged from the rupture discs 111.

More specifically, for example, the base body 20 is a member having low hardness, has such hardness that the base body 20 is able to maintain the shape thereof in the natural state receiving no external force, has such hardness that reaction force is generated when the base body 20 is compressed in the usage state, and also has such hardness that the base body 20 is deformed when receiving the pressure of the gas discharged from the rupture discs 111. However, possible modes of the base body 20 are not limited to having the hardness described herein.

Further, the hardness of the base body 20 is such hardness that, at the time of assembling the battery module 100, the base body 20 is deformed in correspondence with the shape of an attachment destination. More specifically, the hardness of the base body 20 is such low hardness that, at the time of assembling the battery module 100, the base body 10 is deformed in correspondence with the shapes of the top faces 110a of the plurality of battery cells 110 and the base body 10 is deformed in correspondence with the shape of the discharge pipe 120, when the gasket 1 is attached to the top faces 110a of the plurality of battery cells 110 in the battery cell group 101 and when the gasket 1 is attached to the discharge pipe 120. In this situation, when the gasket 1 is attached to the top faces 110a of the plurality of battery cells 110 in the battery cell group 101, the base body 10 may be pressed against the top faces 110a of the plurality of battery cells 110 and may be pressed against the discharge pipe 120, by force of a worker or by force of an assembling machine, for example. Further, the deformation of the base body 10 corresponding to the shapes of the top faces 110a of the plurality of battery cells 110 at the time of the attachment of the gasket 1 described above does not necessarily need to be deformation of the base body 10 completely corresponding to the shapes of the top faces 110a of the plurality of battery cells 110. For example, the deformation of the base body 10 in this situation may be deformation by which a part of the base body 10 contacts a part of the top faces 110a of the plurality of battery cells 110 or by which a part of the base body 10 latchably contacts a part of the top faces 110a of the plurality of battery cells 110. Similarly, the deformation of the base body 10 corresponding to the shape of the discharge pipe 120 at the time of the attachment of the gasket 1 described above does not necessarily need to be deformation of the base body 10 completely corresponding to the shape of the discharge pipe 120. For example, the deformation of the base body 10 in this situation may be deformation by which a part of the base body 10 contacts a part of the discharge pipe 120 or by which a part of the base body 10 latchably contacts a part of the discharge pipe 120.

For example, the base body 20 may be made of low hardness urethane having the hardness described above. However, possible materials of the base body 20 are not limited to urethane. Possible materials of the base body 20 may be one or more other materials that are elastic and may be, for example, low hardness rubber, elastomer, or the like having the hardness described above. For example, for the materials of the base body 20, a mixing proportion of ingredient components may be adjusted so that the hardness of the base body 20 is a desired low level of hardness described above. For example, when a material of the base body 20 is urethane, the mixing proportion of isocyanate components may be adjusted, so that the hardness of the base body 20 is a desired level of hardness.

Further, the flow path portions 10 have heat resistance and are made from a material having heat resistance. For example, the flow path portions 10 have heat resistance against the temperature of the gas discharged from the rupture discs 111, the gas being a sealing target object. More specifically, because the temperature of the gas discharged from the rupture discs 111 may reach 400°C or higher, the heat resistance of the flow path portions 10 may be heat resistance against 400°C or higher, for example. A material of the flow path portions 10 may be polytetrafluoroethylene (PTFE), for example. However, possible materials of the flow path portions 10 may be one or more other materials having the heat resistance described above. Furthermore, the hardness of the flow path portions 10 is higher than the hardness of the base body 20. For example, the hardness of the base body 20 may be such hardness that the base body 20 is not deformed even when receiving the pressure of the gas discharged from the rupture discs 111.

Further, the base body 20 may have adhesiveness. The adhesiveness of the base body 20 may be, for example, adhesiveness capable of fixing the base body 20 against force based on the dead weight of the gasket 1. More specifically, at the time of assembling the battery module 100, the adhesiveness of the base body 20 is such adhesiveness that, when the base body 20 is attached to the top faces 110a of the plurality of battery cells 110 in the battery cell group 101 or when the base body 20 is attached to the discharge pipe 120, the base body 20 adheres to the top faces 110a of the plurality of battery cells 110 or to the discharge pipe 120 due to the adhesiveness of the base body 20, and the base body 20 does not come off the battery cell group 101 or the discharge pipe 120, even when the posture of the battery cell group 101 or the discharge pipe 120 is changed by tilting the battery cell group 101 or the discharge pipe 120, or the like. Further, for example, the adhesiveness of the base body 20 may be such adhesiveness that the base body 20 does not come off the battery cell group 101 or the discharge pipe 120, even with external force that is caused by a worker or the like inadvertently contacting the base body 20 or the like and is not so strong as with an intention to remove the base body 20.

The level of adhesiveness of the base body 20 may be adjusted, for example, according to a required level of adhesiveness. More specifically, for example, at the time of assembling the battery module 100, the level of adhesiveness of the base body 20 may be adjusted on the basis of the size of a contact area by which the base body 20 contacts the top faces 110a of the plurality of battery cells 110 or the discharge pipe 120, when the base body 20 is attached to the top faces 110a of the plurality of battery cells 110 in the battery cell group 101 or when the base body 20 is attached to the discharge pipe 120. For example, when there is a large contact area by which the base body 20 contacts the top faces 110a of the plurality of battery cells 110 or the discharge pipe 120, it is acceptable to set the level of adhesiveness of the base body 20 to be low. The reason is that, when there is a large contact area by which the base body 20 contacts the top faces 110a of the plurality of battery cells 110 or the discharge pipe 20, it is possible, even with low adhesiveness, to prevent the base body 20 from coming off the battery cell group 101 or the discharge pipe 120 because there is a large adhesive region. On the contrary, when there is a small contact area by which the base body 20 contacts the top faces 110a of the plurality of battery cells 110 or the discharge pipe 120, it is desirable to set the level of adhesiveness of the base body 20 to be high because there is a small bonding region. As explained herein, for example, the level of adhesiveness of the base body 20 is adjusted to a magnitude corresponding to the size of the contact area with the attachment destination of the base body 20, e.g., to a magnitude in proportion to the size of the contact area with the attachment destination of the base body 20.

The level of adhesiveness of the base body 20 may be adjusted by adjusting materials of the base body 20, for example. For instance, when a material of the base body 20 is urethane, the lower the hardness of the base body 20 is, the higher is the adhesiveness. Thus, the level of adhesiveness of the base body 20 is adjusted by adjusting the mixing proportion of isocyanate components.

Next, functions of the gasket 1 having the configuration described above will be explained. Fig. 5 is a partial cross-sectional view of the battery module 100 showing a cross-section of the gasket 1 in a usage state and attached to the battery module 100.

As shown in Fig. 5, in the usage state, the gasket 1 is sandwiched between the battery cell group 101 and the discharge pipe 120 and seals the flow path between the rupture discs 111 and the corresponding opening portions 122 of the discharge pipe 120. More specifically, the front surface 21 of the base body 20 of the gasket 1 contacts a surface 120a of the discharge pipe 120, whereas the rear surface 22 of the base body 20 of the gasket 1 contacts the top faces 110a of the battery cells 110 in the battery cell group 101, so that the gasket 1 is compressed between the top faces 110a of the battery cells 110 and the discharge pipe 120. Further, the rupture discs 111 are surrounded by the lower circulation hole surfaces 23b of the circulation hole surfaces 23 of the base body 20, and the openings 122 of the discharge pipe 120 are surrounded by the upper circulation hole surfaces 23a of the circulation hole surfaces 23 of the base body 20. Furthermore, at the battery cells 110, the front surface 21 of the base body 20 contacts the top faces 110a in the surroundings of the rupture discs 111. Also, the rear surface 22 of the base body 20 contacts the surface 120a in the surroundings of the opening portions 122 of the discharge pipe 120. As explained herein, the base portion 20 of the gasket 1 is configured to cause the gas discharged from the rupture discs 111 to flow into the discharge pipe 120 via the circulation holes 24 without leakage.

As shown in Fig. 5, in the usage state, the base body 20 is compressed in the axis line x direction and, for example, contracts as much as the dimensions of the upper crush allowance d1 and the lower crush allowance d2 (see Fig. 4). As a result, the upper end face 14 and the lower end face 15 of each of the circulation portions 10 contact the surface 120a of the discharge pipe 120 and the top face 110a of the corresponding one of the battery cells 110. Accordingly, as shown in Fig. 5, in the usage state, all or almost all of the circulation hole surfaces 23 of the base body 20 of the gasket 1 are covered by the flow path portions 10. Alternatively, in the usage state, the base body 20 compressed in the axis line x direction may contract by an amount smaller than the dimensions of the upper crush allowance d1 and the lower crush allowance d2 (see Fig. 4). In that situation, only the upper end faces 14 of the circulation portions 10 may be out of contact with the surface 120a of the discharge pipe 120, and only the lower end faces 15 of the circulation portions 10 may be out of contact with the top faces 110a of the corresponding battery cells 110. Alternatively, neither the upper end faces 14 nor the lower end faces 15 of the circulation portions 10 may be out of contact with the surface 120a of the discharge pipe 120 and the top faces 110a of the corresponding battery cells 110. In this situation, in the usage state, one or both of the upper circulation hole surfaces 23a and the lower circulation hole surfaces 23b of the circulation hole surfaces 23 of the base body 20 of the gasket 1 have sections that are not covered by the flow path portions 10.

Further, as shown in Fig. 5, in the usage state, the corresponding openings 122 of the discharge pipe 120 are surrounded by the upper end faces 14 of the flow path portions 10. Also, the corresponding rupture discs 111 are surrounded by the lower end faces 15 of the flow path portions 10. However, in the usage state, the upper end faces 14 of the flow path portions 10 do not necessarily need to surround the corresponding openings 122 of the discharge pipe 120. As viewed in the axis line x direction, a part or all of the upper end faces 14 of the flow path portions 10 may be positioned inside the corresponding openings 122 of the discharge pipe 120.

As described above, the circulation hole surfaces 23 defining the circulation holes 24 of the base body 20 are covered by the flow path portions 10 having heat resistance. The circulation hole surfaces 23 defining the circulation holes 24 of the base body 20 are configured so as not to be directly contacted by the gas discharged from the rupture discs 111 and having high temperature and high pressure. When the circulation hole surfaces 23 defining the circulation holes 24 of the base body 20 are not completely covered by the flow path portions 10 having heat resistance, the circulation hole surfaces 23 defining the circulation holes 24 of the base body 20 may slightly be exposed, in some situations, to the gas discharged from the rupture discs 111 and having high temperature and high pressure.

As described above, the base body 20 has low hardness. Thus, the base body 20 easily conforms to the shapes of an attachment surface of the battery cell group 101, the top faces 110a of the battery cells 110, and the surface 120a of the discharge pipe 120 that are contacted by the base portion 20. Accordingly, it is possible to easily attach the base body 20 to the attachment destination to which the gasket 1 is attached, and it is possible to easily attach the gasket 1 to the attachment destination. As explained herein, the base body 20 has high conformability to the object contacted by the base body 20. Consequently, the gasket 1 makes it possible to easily incorporate the gasket 1 into the attachment destination.

Further, the base body 20 has adhesiveness. Thus, the base body 20 adheres to the attachment surface of the battery cell group 101, the top faces 110a of the battery cells 110, and the surface 120a of the discharge pipe 120 that are contacted by the base portion 20. Accordingly, it is possible to easily attach the base body 20 to the attachment destination to which the gasket 1 is attached, and it is possible to easily attach the gasket 1 to the attachment destination. In this aspect also, the gasket 1 makes it possible to easily incorporate the gasket 1 into the attachment destination.

Further, because the base body 20 has low hardness, if any of the circulation hole surfaces 23 of the base body 20 was exposed to the high-pressure gas discharged from the rupture disc 111, the circulation hole surface 23 would be deformed, which would lead to deformation of the base body 20. If the base body 20 was deformed, a sealing property of the gasket 1 would be degraded. However, in the gasket 1, the circulation hole surfaces 23 of the base body 20 are covered by the flow path portions 10 having high hardness, and the circulation hole surfaces 23 of the base body 20 are not directly contacted by the high-pressure gas discharged from the rupture discs 111. As described herein, the circulation hole surfaces 23 of the base body 20 are protected by the flow path portions 10 having higher hardness than the base body 20 and high pressure resistance, from the high-pressure gas discharged from the rupture discs 111. Thus, the circulation hole surfaces 23 are prevented from being deformed or the circulation hole surfaces 23 are inhibited from being deformed, by the high-pressure gas discharged from the rupture discs 111. Consequently, in the gasket 1, it is possible to lower the hardness of the base body 20 for enhancing attachability or the like, and even when the base body 20 has such low hardness that the base body 20 may be deformed when receiving the pressure of the gas discharged from the rupture discs 111, the circulation hole surfaces 23 are prevented from being deformed or the circulation hole surfaces 23 are inhibited from being deformed, by the high-pressure gas discharged from the rupture discs 111. As explained herein, the gasket 1 has excellent pressure resistance.

Further, the flow path portions 10 have high heat resistance. Thus, the heat of the high-temperature gas discharged from the rupture discs 111 reaching the circulation hole surfaces 23 of the base body 20 is blocked or reduced by the flow path portions 10. Consequently, the base body 20 does not get melted by the high-temperature gas discharged from the rupture discs 111 or is inhibited from being melted by the high-temperature gas discharged from the rupture discs 111. As explained herein, the gasket 1 has excellent heat resistance.

Further, as explained above, even when the circulation hole surfaces 23 of the base body 20 are not completely covered by the flow path portions 10, it is possible to reduce the amount of the high-pressure gas that is discharged from the rupture discs 111 and may contact the circulation hole surfaces 23 of the base body 20. Thus, even with the flow path portions 10 not completely covering the circulation hole surfaces 23 of the base body 20, it is possible to inhibit the circulation hole surfaces 23 from being deformed by the high-pressure gas discharged from the rupture discs 111. Consequently, in this situation also, the gasket 1 has excellent pressure resistance.

Further, even when the circulation hole surfaces 23 of the base body 20 are not completely covered by the flow path portions 10, it is possible to reduce the amount of the high-temperature gas that is discharged from the rupture discs 111 and may contact the circulation hole surfaces 23 of the base body 20. Thus, even with the flow path portions 1 not completely covering the circulation hole surfaces 23 of the base body 20, it is possible to inhibit the circulation hole surfaces 23 from being melted by the high-temperature gas discharged from the rupture discs 111. Consequently, in this situation also, the gasket 1 has excellent heat resistance.

As explained above, the gasket 1 according to the first embodiment of the present invention is able to enhance the conformability to the object being contacted and to achieve excellent heat resistance and pressure resistance.

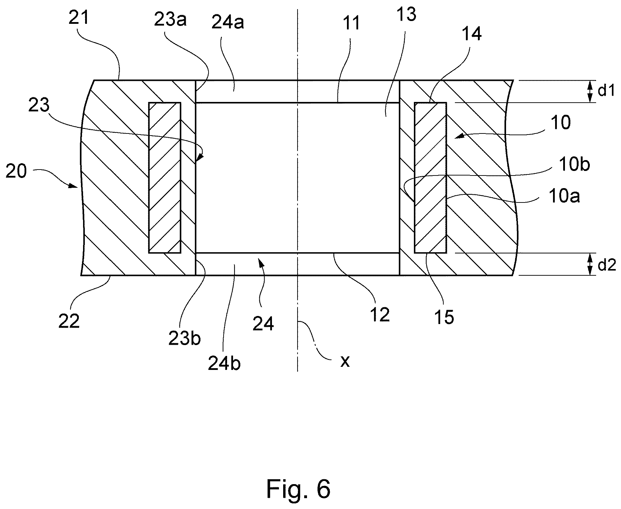

Further, in the gasket 1 described above, an inner peripheral surface 10b of each of the flow path portions 10 is entirely exposed to the flow path hole 24; however, the inner peripheral surface 10b of each of the flow path portions 10 may be covered by the base body 20. For example, as shown in Fig. 6, the flow path portions 10 may be embedded in the base body 20. In that situation, it is possible to easily produce the gasket 1 by insert molding. Fig. 6 shows a cross-section corresponding to Fig. 4. In this situation, one or both of the upper end face 14 and the lower end face 15 of each of the flow path portions 10 may be exposed from the base body 20. Further, a part of the inner peripheral surfaces 10b of the flow path portions 10 may be covered by the base body 20.

Next, a gasket 2 according to a second embodiment of the present invention will be explained. The gasket 2 according to the second embodiment of the present invention is different from the gasket 1 described above for the configuration of the base body and has a base body 30 different from the base body 20. In the following sections, some of the configurations of the gasket 2 having the same or similar functions as those of the gasket 1 will be referred to by using the same reference signs, and explanations thereof will be omitted, and different configurations will be explained.

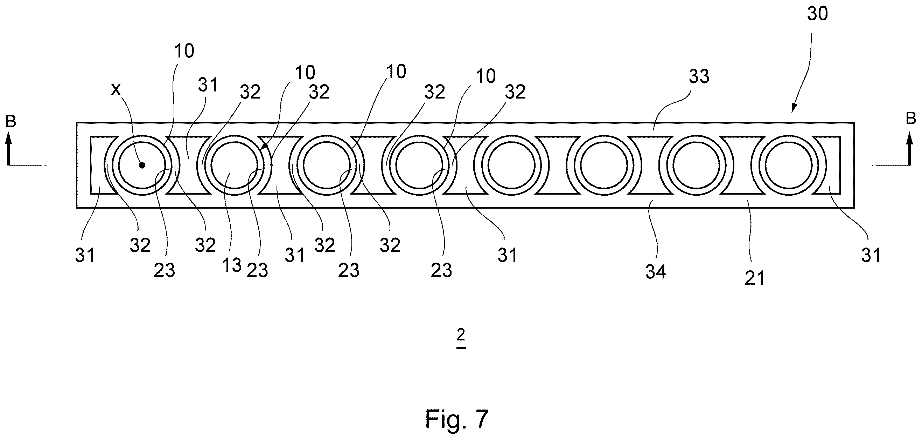

Fig. 7 is a plan view of the gasket 2 according to the second embodiment of the present invention. As described above, the base body 20 of the gasket 1 is configured in such a manner that a space between any two circulation hole surfaces 23 positioned adjacent to each other is solid and filled with the material of the base body 20. In contrast, as shown in Fig. 7, the base body 30 of the gasket 2 is configured in such a manner that the space between any two circulation hole surfaces 23 positioned adjacent to each other is not solid. Formed between any two circulation hole surfaces 23 positioned adjacent to each other is a hollowed-out part 31 being a part (a recessed part) recessed in the axis line x direction. As shown in Fig. 7, for example, each of the hollowed-out parts 31 is a through hole penetrating between the front surface 21 and the rear surface 22.

Further, as shown in Fig. 7, the base body 30 has peripheral wall parts 32 formed around the circulation holes 24 by the hollowed-out parts 31, the peripheral wall parts 32 each extending in the axis line x direction. Each of the peripheral wall parts 32 is a section defining a part of the corresponding one of the circulation hole surfaces 23 and has a thickness from the circulation hole surface 23 toward the outer periphery side. Further, as shown in Fig. 7, the base body 30 has a pair of lateral wall parts 33 and 34 formed by the hollowed-out parts 31, the lateral wall parts 33 and 34 each extending in the array direction of the flow path portions 10. The lateral wall part 33 and the lateral wall part 34 face each other while the peripheral wall part 32 is interposed and are integrally contiguous with the peripheral wall part 32. The lateral wall part 33 and the lateral wall part 34 each define a part of a corresponding one of the circulation hole surfaces 23.

In the gasket 2, as described above, the hollowed-out parts 31 are formed in the base body 30. Thus, when the base body 30 is compressed in the usage state of the gasket 2, the peripheral wall parts 32 and the lateral wall parts 33, 34 are able to be deformed toward the inside of the hollowed-out parts 31. Consequently, in the usage state, it is possible to inhibit a filling rate of the base body 30 from rising beyond a tolerable range above which the base body 30 may be damaged. Meanwhile, it is possible to guarantee sealability between the base body 30 and the battery cell group 101 and the discharge pipe 120.

As explained above, the shapes of the hollowed-out parts 31 are adjusted, for example, so that the filling rate of the base body 30 has a desired value and so that the base body 30 has desired sealability, and thus, the thickness of the peripheral wall parts 32, the thickness of the lateral wall parts 33, and the thickness of the lateral wall parts 34 are adjusted.

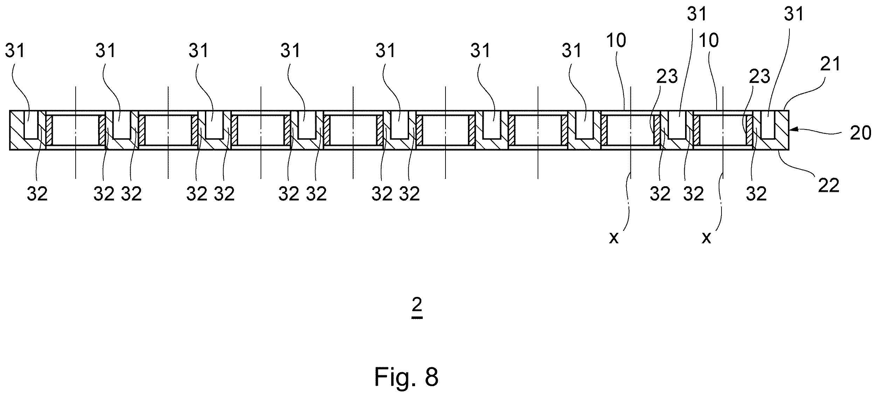

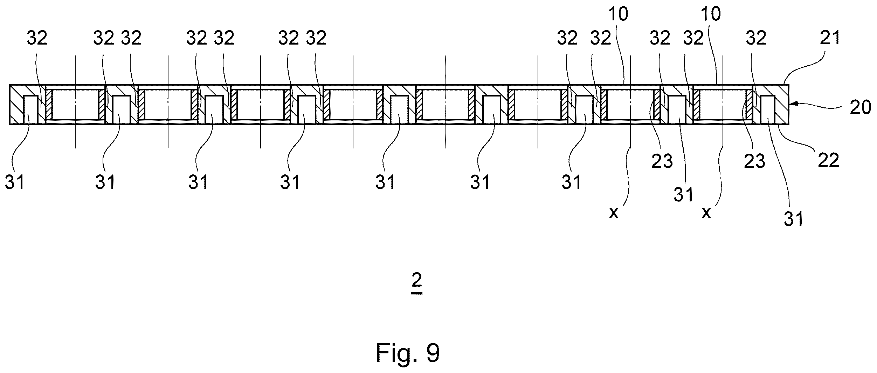

Further, the hollowed-out parts 31 are not limited to being structured to penetrate the base body 30 as described above. For example, as shown in Fig. 8, each of the hollowed-out parts 31 may be recessed from the front surface 21 while not penetrating the rear surface 22. Alternatively, as shown in Fig. 9, each of the hollowed-out parts 31 may be recessed from the rear surface 22 while not penetrating the front surface 21. Figs. 8 and 9 each show a cross-section corresponding to the cross-section taken along line B-B in Fig. 7.

Further, the base body 30 do not necessarily need to be provided with the hollowed-out part 31 between all the sets of two circulation hole surfaces 23 positioned adjacent to each other. There may be one or more sections between two circulation holes 22 positioned adjacent to each other that do not have the hollowed-out part 24 placed.

Further, the gasket 2 achieves the same or similar functions as those of the gasket 1 described above. Thus, the gasket 2 according to the second embodiment of the present invention is able to enhance the conformability to the object being contacted and to achieve excellent heat resistance and pressure resistance.

The present invention has thus been explained through the above embodiments; however, the technical scope of the present invention is not limited to the scope described in the above embodiments. It is apparent to persons skilled in the art that various modifications or improvements may be applied to the above embodiments. It is apparent from the contents of the patent claims that any mode resulting from such modifications or improvements can be included in the technical scope of the present invention.

The embodiments described above are intended to facilitate comprehension of the present invention and are not intended to limit interpretation of the present invention. Further, the above embodiments are not intended to limit the subjects to which the present invention is to be applied. The present invention may include anything as applicable subjects thereof. The constituent elements in the above embodiments and the positional arrangements, materials, conditions, shapes, sizes, and the like thereof are not limited to those presented in the examples and may be modified as appropriate. For example, the present invention includes errors such as tolerances in manufacturing that may occur while being carried out. Further, any of the constituent elements described in mutually-different embodiments may partially be substituted or be combined, as long as no technical conflict occurs. In addition, it is also possible to selectively combine certain configurations as appropriate, so as to at least partially solve the abovementioned problems and achieve the abovementioned advantageous effects.

### Reference Signs List

1,2: gasket; 10: flow path portion; 10a: outer peripheral surface; 10b: inner peripheral surface; 11, 12: opening; 13: flow path; 14: upper end face; 15: lower end face; 20, 30: base body; 21: front surface; 22: rear surface; 23: circulation hole surface; 23a: upper circulation hole surface; 23b: lower circulation hole surface; 23c: contact surface; 24: circulation hole; 24a: upper circulation hole portion; 24b: lower circulation hole portion; 31: hollowed-out part; 32: peripheral wall part; 33, 34: lateral wall part; 100: battery module; 101: battery cell group; 110: battery cell; 110a: top face; 111: rupture disc; 112: electrode; 120: discharge pipe; 120a: surface; 121: discharge port; 122: opening; 123: gas discharge path; d1, d2: crush allowance; **x:** axis line.

## Claims

1. A gasket used between two members for providing sealing for a sealing target object, the gasket comprising:
a plurality of flow path portions each being a tubular member and having a pair of openings; and
a base body having a pair of surfaces facing away from each other, wherein
the base body is elastic,
the flow path portions are held by the base body in such a manner that the pair of openings respectively open on the pair of surfaces of the base body, so as to form a flow path for the sealing target object, and
hardness of the base body is lower than hardness of the flow path portions.

2. The gasket according to claim 1, wherein
the base body has such hardness that the base body is able to maintain a shape thereof in a natural state receiving no external force.

3. The gasket according to claim 2, wherein
the base body has such hardness that reaction force is generated when the base body is compressed between the two members.

4. The gasket according to claim 1, wherein
the base body has such hardness that the base body is deformed when receiving pressure of the sealing target object.

5. The gasket according to claim 1, wherein
the base body is formed from a material having low hardness, and
the material having the low hardness includes rubber, urethane, an elastomer.

6. The gasket according to claim 1, wherein
the flow path portions are formed from a material having heat resistance.

7. The gasket according to claim 6, wherein
the heat resistance of the flow path portions is heat resistance against temperature of the sealing target object.

8. The gasket according to claim 6, wherein
the material is PTFE.

9. The gasket according to claim 1, wherein
the base body has adhesiveness.

10. The gasket according to claim 9, wherein
the adhesiveness of the base body is adhesiveness capable of fixing the base body against force based on a dead weight of the gasket.

11. The gasket according to claim 1, wherein
the base body has a recessed part between any two of the flow path portions positioned adjacent to each other, and
the recessed part is recessed in directions in which the pair of surfaces of the base body face.

12. The gasket according to claim 1, wherein
one of the two members is a plurality of battery cells of a battery module,
another of the two members is a gas discharge portion forming a space for guiding gas discharged from respective rupture discs of the plurality of battery cells,
the sealing target object is the gas discharged from the plurality of rupture discs, and
each of the plurality of flow path portions forms the flow path for the gas discharged from the plurality of rupture discs.
